# FASCICULE DE BREVET EUROPEEN

(11) **EP 4 051 484 B1**
(45) Date de publication et mention de la délivrance du brevet: **16.08.2023**
(21) Numéro de dépôt: 20793721.0
(22) Date de dépôt: 28.10.2020
(51) Int. Cl.: B29C 49/78, B29C 49/80, B29C 49/06, B29K 67/00, B29L 31/00

(54) **PROCEDE DE CONTROLE D'UN RECIPIENT EN MATIERE PLASTIQUE ET MACHINE DE FABRICATION D'UN TEL RECIPIENT**
VERFAHREN ZUR INSPEKTION EINES BEHÄLTERS AUS KUNSTSTOFF UND MASCHINE ZUM FERTIGEN EINES SOLCHEN BEHÄLTERS
METHOD FOR INSPECTING A CONTAINER MADE OF PLASTICS MATERIAL, AND MACHINE FOR MANUFACTURING SUCH A CONTAINER

(30) Priorité: 30.10.2019 FR 1912174
(43) Date de publication de la demande: 07.09.2022
(73) Titulaire: Sidel Participations, 76930 Octeville-sur-Mer (FR)
(72) Inventeur: DERRIEN, Mikael, 76930 OCTEVILLE-SUR-MER (FR)
(74) Mandataire: Sidel Group
(86) Numéro de dépôt international: PCT/EP2020/080212
(87) Numéro de publication internationale: WO 2021/083917

(56) Documents cités:
- WO-A1-2011/137264
- US-A- 5 928 581
- US-A1- 2006 214 321

## Description

Le domaine de l'invention est celui de la conception et de la réalisation de machines de fabrication de récipients en matière plastique.

Plus précisément, l'invention concerne un procédé de contrôle de récipients en matière plastique obtenus par moulage.

Les récipients en matière plastique sont classiquement obtenus à partir de préformes chauffées jusqu'à une température de transition vitreuse à laquelle la matière plastique est ramollie et se déforme aisément.

Une fois chauffées, les préformes sont introduites dans une unité de formage comprenant des postes de soufflage comprenant chacun au moins un moule pour y être soufflées par injection d'air et épouser la forme d'un moule qui leur confère leur forme finale.

Lorsque les récipients sont fabriqués, ils sont contrôlés afin de déterminer leur bonne résistance pour leur utilisation future.

Plusieurs méthodes de contrôle existent actuellement.

Une première méthode, par échantillonnage, consiste à découper le récipient et à mesurer les différentes épaisseurs en différents points du récipient, notamment pour vérifier la présence minimale de matière permettant au récipient de résister.

Cela est particulièrement utile lorsque les récipients sont destinés à contenir des boissons carbonatées, c'est-à-dire des boissons comprenant un gaz carbonique mettant sous pression le récipient lorsqu'il est bouché.

Les récipients doivent donc résister à la pression et ne pas rompre sous l'effet de celle-ci. L'épaisseur des récipients permet de vérifier la résistance.

Or, quand un récipient est vérifié selon cette première méthode, il est ensuite inutilisable. Il est par ailleurs connu que la qualité d'un récipient dépend en grande partie de la qualité de la préforme.

Aussi une telle méthode par échantillonnage ne permet pas de garantir de manière significative la qualité des récipients produits.

Une autre méthode connue consiste à vérifier l'épaisseur des parois du récipient directement en sortie de l'unité de formage par un procédé comprenant :
- une étape de captation d'une image technique du récipient en sortie de moule ;
- une étape de caractérisation du récipient dans laquelle une règle d'acceptation ou de refus de la qualité du récipient est appliquée, en fonction de l'image thermique du récipient en sortie de moule.

On pourra, à titre d'exemple, se référer aux documents de brevets publiés sous les numéros EP 0 643 297 et EP 0 177 004. D'autres procédés de contrôle d'un récipient et machines de fabrication de récipients sont décrits dans les documents WO2011/137264A1, US2006/214321 A1 et US5928581 A.

Un tel procédé est cependant contraignant et ne permet pas d'être adapté à tous les récipients.

Par ailleurs, un tel procédé ne permet pas de déterminer précisément les raisons du rejet d'un récipient.

Enfin, un tel procédé peut autoriser un récipient à être utilisé et donc considéré comme acceptable par rapport à l'épaisseur de ses parois, sans que ces dernières ne correspondent réellement à une géométrie prédéterminée permettant de résister à des efforts comme la pression interne par exemple.

En effet, par la simple mesure de l'épaisseur des parois, il est possible de ne constater que la présence ou l'absence d'une épaisseur minimale de matière, sans que les formes géométriques ne soient contrôlées.

Les récipients présentent en effet des formes particulières telles que des rainures, des pieds ou des bosselages, permettant de créer des zones souples, ou au contraire des zones rigides, pour résister notamment à la pression interne des boissons carbonatées, à la dépression ou encore à des charges verticales ou horizontales sur les récipients.

Il existe donc certains cas dans lesquels un récipient peut être mis dans le commerce alors qu'il est non conforme ou défectueux.

Or, l'introduction d'un emballage non conforme sur le reste de la ligne d'embouteillage, peut entraîner des défauts de pose d'étiquette, des défauts de conditionnement en pack, des déformations ou écroulements de palettes de récipients par exemple.

Ces défauts peuvent être constatés jusque dans les centres de distribution, où des bouteilles déformées ou mal formées peuvent également être nuisibles à l'image de la marque et donc à sa commercialisation.

L'invention a notamment pour objectif de pallier les inconvénients de l'art antérieur.

Plus précisément, l'invention a pour objectif de proposer un procédé de contrôle non destructif des récipients en matière plastique obtenus par moulage par soufflage, permettant d'accroître le contrôle de la qualité des récipients fabriqués et d'éviter notamment tout risque d'acceptation d'un récipient devant être rebuté.

L'invention a également pour objectif de fournir un tel procédé qui permette à un opérateur de fabrication de pouvoir ajuster des paramètres de fabrication ou, à tout le moins, d'être mis en connaissance de cause d'une défaillance de production.

L'invention a en outre pour objectif de fournir un tel procédé qui permette en cas de besoin une rétroaction sur le processus de fabrication des moules et notamment leur géométrie qui confère la forme finale aux récipients.

Un autre objectif de l'invention est de permettre de réduire la consommation d'énergie nécessaire à la fabrication des récipients, notamment en permettant de réduire les pressions de soufflage par rapport aux procédés standards. En effet, l'obtention des hautes pressions nécessaires au soufflage requiert une consommation d'énergie significative, notamment d'énergie électrique pour faire fonctionner les compresseurs. Une réduction de la pression de soufflage va donc de pair avec une réduction de la consommation d'énergie.

Ces objectifs, ainsi que d'autres qui apparaîtront par la suite, sont atteints grâce à l'invention qui a pour objet un procédé de contrôle d'un récipient en matière plastique obtenu par moulage par soufflage, le procédé comprenant :
- une étape de captation d'une image thermique du récipient en sortie de moule ;
- une étape de caractérisation du récipient, dans laquelle une règle d'acceptation ou de refus de la qualité du récipient est appliquée, en fonction de l'image thermique du récipient en sortie de moule,

caractérisé en ce que, préalablement à l'étape de caractérisation, le procédé comprend une étape d'identification, sur l'image thermique, d'au moins une zone critique correspondant à une partie structurelle du récipient,
et en ce que la règle d'acceptation est paramétrée pour considérer un récipient comme acceptable si, pour chaque zone critique identifiée, la température du récipient est inférieure à une température seuil prédéterminée.

Grâce à ce procédé, il est possible d'optimiser le temps de contrôle mais également la qualité du contrôle.

En effet, en identifiant des zones critiques, il est possible de contrôler uniquement ces zones-là pour permettre de caractériser comme acceptable ou non un récipient.

Ainsi, les temps de captation d'image et de caractérisation du récipient sont largement réduits par rapport à un procédé classique.

En outre, contrairement à un procédé selon une méthode de l'art antérieur, en focalisant sur les zones critiques, il est possible de vérifier la conformité d'un récipient, dans la mesure où lesdites zones critiques correspondent à des zones géométriques particulières du récipient, développées notamment pour résister aux pressions internes, dépressions, ou encore charges verticales et/ou horizontales.

De plus, l'utilisation de la température seuil prédéterminée permet de vérifier que le récipient est correctement formé. Cette vérification est effectuée tant en termes de qualité que de respect d'un cahier des charges de fabrication.

En effet, lorsqu'un récipient est correctement formé, la majeure partie de la matière plastique est venue au contact des parois du moule selon un temps de contact précis. A tout le moins, la majorité des zones jugées comme critiques, car fonctionnelles sur l'emballage, sont venues au contact des parois du moule selon un temps de contact précis.

Lors du contact entre la matière plastique et le moule, celle-ci se refroidit jusqu'à atteindre une température de sortie de moule qui est dans une plage restreinte connue.

Ainsi, lorsque l'on compare la température du récipient avec la température seuil prédéterminée, il est possible de déterminer si la matière plastique est entrée ou non en contact avec les parois du moule et, si oui, si elle est restée au contact des parois du moule assez longtemps pour être convenablement refroidie.

Une matière plastique trop peu refroidie reste donc malléable, ce qui présente un risque de déformation du récipient et donc un manque de résistance à la pression du récipient. La déformation du récipient débute alors immédiatement après l'étape de dégazage, c'est-à-dire après que la pression résultant du soufflage à l'intérieur du récipient est retombée à la pression ambiante (généralement la pression atmosphérique), qui prend place après le formage du récipient dans les procédés de fabrication classiquement connus.

La combinaison de l'identification des zones critiques et de la température du récipient formé permet de vérifier qu'en des points stratégiques du récipient, celui-ci sera en mesure de résister par exemple à une pression interne générée par son contenu (boissons carbonatées par exemple) ou une pression externe telle qu'une pression par-dessus (appelée "top load") apparaissant lors de la mise en pack ou de la palettisation des récipients, ou à d'autres types de contraintes.

En effet, par exemple, dans le cas du remplissage avec des boissons carbonatées, certaines zones des récipients, très peu soumises aux efforts de pression de la boisson carbonatée, n'ont ainsi pas besoin d'être contrôlées.

D'autres zones pour lesquelles la fonctionnalité de résistance n'est pas essentielle à la ligne d'embouteillage ou aux caractéristiques intrinsèques de l'emballage n'ont ainsi pas besoin d'être contrôlées non plus.

Selon un mode préféré de réalisation, la température seuil prédéterminée est comprise entre 45°C et 75°C.

Une telle gamme de valeurs permet de considérer comme acceptables des récipients dont la température ne dépasse pas ladite gamme de valeurs. Cela permet donc d'offrir un contrôle et une tolérance d'acceptation assez large.

De préférence, la température seuil prédéterminée est de 60°C.

Cette température, considérée comme température maximale du récipient à sa sortie du moule, permet d'assurer une tenue mécanique du récipient après que celui-ci soit sorti du moule. Au-delà de cette température, la tenue mécanique ne peut pas être garantie.

Avantageusement, le procédé comprend une étape de génération d'une alerte à destination d'un opérateur en cas d'identification d'un récipient considéré comme non acceptable.

Une telle alerte permet d'attirer l'attention de l'opérateur afin que ce dernier suive l'évolution de la fabrication des récipients sur la machine, et notamment l'évolution des récipients fabriqués à partir du moule dont le récipient sortant a généré l'alerte.

Ainsi, il est possible de conclure, soit à une défaillance au niveau de l'un des postes de soufflage (qu'il s'agisse d'une défaillance du moule associé au poste considéré ou de la défaillance d'un autre composant associé à un poste de soufflage, tel qu'une électrovanne), lorsque plusieurs ou tous les récipients déclarés non conformes sortent d'un même poste de soufflage, soit à une défaillance globale de la machine, lorsque les récipients déclarés non conformes sortent de postes de soufflage différents, soit encore à un défaut de fabrication d'une préforme ou à une défaillance transitoire par exemple lorsqu'un seul récipient est déclaré non conforme.

Ainsi, par son suivi, l'opérateur peut prendre la décision de modifier le procédé de fabrication, notamment les conditions de chauffe des préformes, les différentes pressions de soufflage et les temps d'injection d'air comprimé ou de dégazage, agir directement en rendant inactif un poste de soufflage si celui-ci est défectueux, arrêter une production en cas de défaillance globale ou encore contribuer à l'amélioration du développement des moules pour permettre d'obtenir des récipients de formes moins complexes ou, au contraire, des récipients plus complexes pour lesquels il est souhaitable d'améliorer les propriétés afin de les rendre résistants à de plus hautes pressions internes, par exemple.

De préférence, l'étape de captation d'une image thermique du récipient en sortie de moule est réalisée dans un intervalle de temps inférieur ou égal à 5 secondes à compter de la fin de l'étape de dégazage du récipient, qui survient à l'issue de la fabrication du récipient. La fin de cette étape correspond à l'instant où la pression interne du récipient résultant du soufflage est redescendue à la pression ambiante, laquelle pression interne est surveillée en permanence.

Un tel intervalle évite que le récipient ne se refroidisse de manière trop importante au contact de l'air ambiant en sortie de moule.

En effet, lorsqu'un récipient quitte le moule dans lequel il a été fabriqué, il entre immédiatement en contact avec l'air ambiant de la machine de fabrication des récipients, cet air étant généralement compris entre 10°C et 40°C.

En prenant en considération qu'un récipient présente généralement des parois ayant une épaisseur de l'ordre de 25 centièmes de millimètre, le refroidissement des zones mal formées ou ayant eu un temps de contact très court avec le moule est très rapide, ce qui empêche la détection de défauts par image thermique au-delà de l'intervalle précédemment décrit.

De manière encore plus préférentielle, l'étape de captation d'une image thermique du récipient en matière plastique en sortie de moule est réalisée dans un intervalle de temps inférieur ou égal à 0,6 seconde à compter de la fin de l'étape de dégazage du récipient.

Cet intervalle restreint offre plus de garanties quant au bon déroulement du procédé de contrôle des récipients, et notamment de l'étape de captation d'une image thermique du récipient.

L'invention concerne également une machine de fabrication de récipients en matière plastique caractérisée de ce qu'elle comprend :
- une unité de formage des récipients avec au moins un avec au moins poste de soufflage comprenant au moins un moule ;
- des moyens d'acquisition d'une image thermique positionnée en sortie de l'unité de formage ;
- une unité informatique, connectée aux moyens d'acquisition d'une image thermique, l'unité informatique étant paramétrée pour mettre en oeuvre le procédé tel que précédemment décrit.

Une telle machine permet donc de réaliser un contrôle direct des récipients en sortie de l'unité de formage, cela afin de faciliter l'étape de contrôle et de limiter l'impact sur la production ou, au contraire, d'agir de manière rapide sur l'évolution du procédé de fabrication pour limiter les risques de récipients rebutés.

De préférence, les moyens d'acquisition d'une image thermique comprennent une caméra thermique.

La caméra thermique, positionnée en sortie de l'unité de formage, permet d'obtenir une image thermique du récipient afin d'en contrôler aisément qualité par le biais du procédé tel que précédemment décrit.

En outre, une telle caméra thermique peut présenter une définition nominale peu élevée permettant cependant de réaliser un contrôle précis et qualitatif.

Avantageusement, l'unité de formage comprend une pluralité de postes de soufflage avec chacun au moins un moule pour la formation des récipients, l'unité informatique étant paramétrée pour associer chaque récipient à l'un des moules, et générer une alerte à destination d'un opérateur en cas de récipient considéré comme non acceptable, ladite alerte incluant notamment des informations d'association permettant de déterminer dans lequel des moules de l'unité de formage (donc dans lequel des postes de soufflage) un récipient considéré comme non acceptable a été fabriqué.

Ainsi, il est possible de suivre l'évolution de l'un des postes de soufflage en particulier pouvant présenter un défaut par exemple, de sorte à vérifier, de manière précise, la qualité de chaque récipient formé par ledit poste ou, au contraire, de supprimer l'activité dudit poste, notamment en le rendant inactif lors des cycles de fabrication.

En outre, cela permet de suivre avec précision les différentes étapes de fabrication des récipients, ce qui accroît la traçabilité et donc la qualité des récipients.

Selon un mode préférentiel de réalisation, la machine comprend également une interface de dialogue avec un opérateur, l'interface de dialogue permettant l'affichage de l'alerte générée par l'unité informatique.

Cette interface de dialogue assure alors une visibilité et un affichage d'informations pour l'opérateur, ce dernier pouvant, via l'unité de dialogue, suivre la fabrication en temps réel, modifier les paramètres de fabrication appliqué à un ou plusieurs postes de soufflage ou, enfin, valider et confirmer à l'unité informatique qu'il s'agit d'un récipient défaillant unique, ne remettant pas en cause la fabrication des autres récipients.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés, parmi lesquels :
[Fig. 1] est une vue schématique d'une machine de fabrication de récipient selon l'invention ;
[Fig. 2] est une vue schématique d'un filtre appliqué à une image thermique d'un récipient obtenue à partir de la machine de fabrication de la figure 1, lors de la mise en oeuvre du procédé de contrôle par l'unité informatique de la machine.

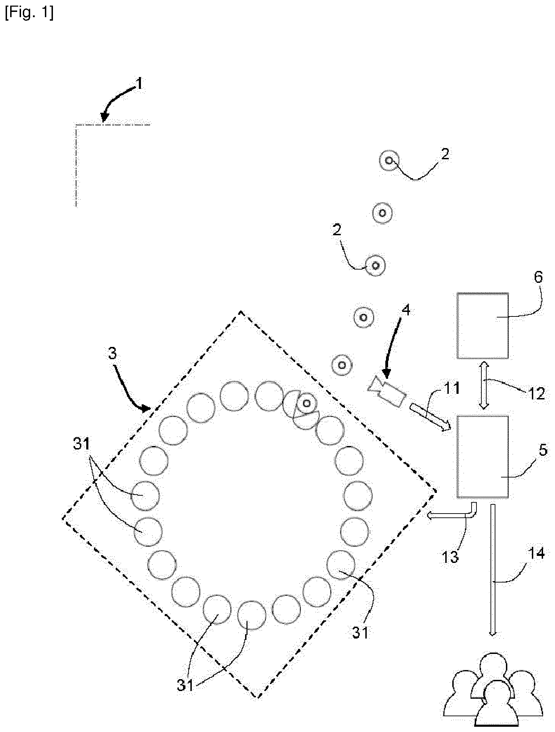

En référence à la figure 1, une machine 1 de fabrication de récipients 2 selon l'invention comprend :
- une unité de formage 3 des récipients 2, comprenant une pluralité de postes de soufflage avec chacun au moins un moule 31 destiné à former un récipient 2 à une forme finale d'utilisation ;
- des moyens d'acquisition 4 d'une image thermique des récipients 2 formés par l'unité de formage 3 ;
- une unité informatique 5 ;
- une interface 6 de dialogue.

Par souci de simplification, à moins qu'une plus grande précision sémantique ne soit nécessaire, dans le reste de la description, le terme "moule" sera considéré comme équivalent au terme "poste de soufflage".

Les récipients 2 sont avantageusement réalisés en matière plastique comme le PET (Polyéthylène téréphtalate) par exemple.

Les moyens d'acquisition 4 d'une image thermique sont positionnés en sortie de l'unité de formage 3 et comprennent avantageusement une caméra thermique.

La caméra thermique est paramétrée pour prendre une image thermique instantanée d'un récipient 2 en sortie de l'unité de formage 3 et transférer ladite image thermique à l'unité informatique 5.

L'unité informatique 5 est connectée aux moyens d'acquisition 4 et est paramétrée pour mettre en oeuvre un procédé de contrôle des récipients 2 obtenus par moulage dans l'unité de formage 3, afin de caractériser les récipients 2 comme acceptables ou non acceptables en vue de leur utilisation finale.

Le procédé comprend :
- une étape de captation d'une image thermique du récipient 2 en sortie de moule 31 ;
- une étape de caractérisation du récipient 2.

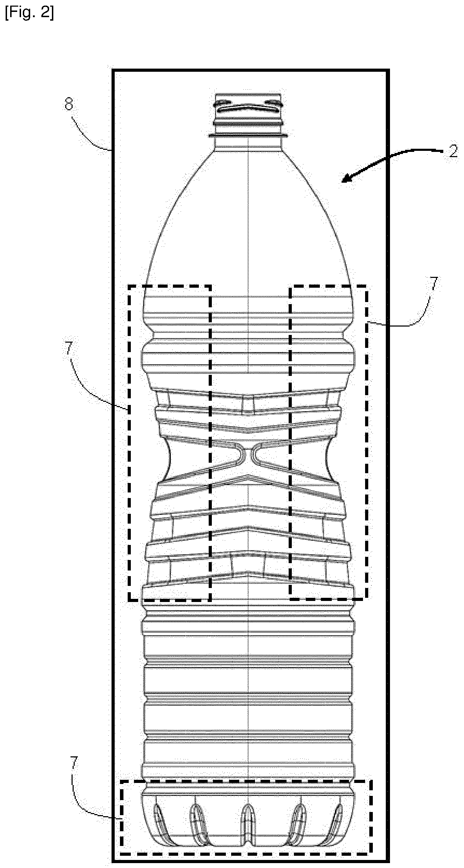

L'étape de captation est réalisée par les moyens d'acquisition 4 d'une image thermique et permet d'obtenir, tel qu'illustré sur la figure 2, une image thermique d'un récipient 2 formé. L'image thermique est alors transmise par les moyens d'acquisition 4 à l'unité informatique 5 tel qu'illustré par la flèche 11 sur la figure 1.

Pour des raisons de clarté, la figure 2 n'illustre pas les gradients de température du récipient 2.

Cette étape de captation est réalisée dans un intervalle de temps inférieur ou égal à 5 secondes à compter de la fin de l'étape de dégazage du récipient 2, qui survient à l'issue de la fabrication de ce dernier. La fin de cette étape correspond à l'instant où la pression interne du récipient, qui redescend de la pression de soufflage, parvient à la pression ambiante, laquelle pression interne est surveillée en permanence lors des étapes successives de fabrication. Un tel procédé de fabrication des récipients 2 est largement connu dans ce domaine technique.

Cet intervalle de temps faible évite que le récipient 2 ne se refroidisse de manière trop importante au contact de l'air ambiant en sortie de moule.

En prenant en considération qu'un récipient présente généralement des parois ayant une épaisseur de l'ordre de 25 centièmes de millimètre, un refroidissement trop important du récipient 2 empêcherait l'identification de gradients thermiques sur l'image thermique du récipient 2.

Préférentiellement, l'étape de captation d'une image thermique du récipient 2 en sortie de moule 31 est réalisée dans un intervalle de temps inférieur ou égal à 0,6 seconde à compter de la fin de l'étape de dégazage du récipient 2.

Lors de l'étape de caractérisation du récipient 2, une règle d'acceptation ou de refus de la qualité du récipient 2 est appliquée en fonction de l'image thermique du récipient 2 en sortie de moule 31.

Plus particulièrement, en référence aux figures 1 et 2, préalablement à cette étape de caractérisation, et notamment à l'application de la règle d'acceptation ou de refus, l'unité informatique 5 transforme l'image thermique obtenue par les moyens d'acquisition 4.

Pour cela, l'unité informatique 5 réalise une étape d'identification, sur l'image thermique, d'au moins une zone critique 7 correspondant à une partie structurelle du récipient 2.

Les zones critiques 7 sont par exemple des zones de bossage ou de stries permettant de réaliser des renforts structurels du récipient 2, ou encore le fond du récipient 2 qui concentre une majorité des contraintes du récipient 2 lorsque celui-ci renferme une boisson carbonatée.

Plus précisément, l'unité informatique 5, pour chaque image thermique, applique un masque 8 recouvrant l'image thermique, ce masque 8, tel qu'illustré sur la figure 2, présente des zones cibles définissant les zones critiques 7 du récipient.

En d'autres termes, le masque 8 comprend des fenêtres identifiant des parties particulières du récipient 2, devant présenter des caractéristiques de résistance minimale.

En effet, lors de leur utilisation, les récipients 2 sont soumis à diverses contraintes, soit internes, telles qu'une pression interne, ce qui est par exemple le cas des récipients 2 contenant des boissons gazeuses ou carbonatées, soit externes sur les lignes d'embouteillage ou dans les sites de distribution.

Dans tous ces cas, les récipients 2 sont soumis à des contraintes pour lesquels des défauts de formation peuvent être critiques, d'un point de vue technique. Des défauts de formation peuvent également être d'ordre esthétique, particulièrement sur des zones qui pourraient porter préjudice à la qualité perçue par le consommateur, ce qui peut directement affecter les niveaux de vente des produits. L'apparition des défauts de fabrication des récipients 2 est particulièrement notable dans les lignes de production sur lesquelles la pression de soufflage des emballages est réduite et optimisée au maximum, c'est-à-dire sur la majorité des lignes désormais présentes et la quasi-totalité des lignes futures.

L'identification des zones critiques a pour effet de limiter la durée du calcul et notamment l'étendue de l'application de la règle d'acceptation ou de refus à ces seules zones critiques 7.

L'unité informatique 5 utilise donc les zones critiques 7 identifiées dans lesquelles elle applique la règle d'acceptation ou de refus.

Ladite règle d'acceptation est alors paramétrée pour considérer un récipient comme acceptable si, pour chaque zone critique 7 identifiée, la température du récipient 2 au niveau de ladite zone est inférieure à une température seuil prédéterminée.

Selon un mode de réalisation préférentiel, la température seuil prédéterminée est comprise entre 40°C et 75°C.

De préférence, la température seuil prédéterminée est de 60°C.

Ainsi, lorsque dans les zones critiques 7 la température du récipient 2 relevée par l'image thermique est supérieure à la valeur seuil prédéterminée, alors le récipient 2 est refusé et considéré comme non acceptable.

Au contraire, si la température est inférieure à la température seuil prédéterminée, cela pour chaque zone critique 7, alors le récipient 2 est considéré comme acceptable.

Une température supérieure à la température seuil prédéterminée peut résulter d'un manque de contact entre la matière constitutive du récipient 2 et les parois du moule 31.

En effet, lors du contact entre la matière plastique du récipient 2 et les parois du moule 31, la matière plastique tend à se refroidir.

Dès lors, s'il n'y a pas de contact entre la matière plastique et le moule 31, ou si le contact n'est pas assez marqué, c'est-à-dire qu'il est trop court, alors le récipient peut être incomplètement formé et la matière plastique ne se refroidit pas assez, ce qui peut provoquer une déformation des zones concernées du fait qu'elles sont encore trop malléables, lorsque le récipient 2 est sorti de son moule 31 de fabrication.

En outre, certains détails du récipient 2, tel que des rainures de renforcement, peuvent ne pas être correctement créés sur le récipient 2 final, ce qui en limite sa résistance mécanique.

Le procédé est appliqué pour chacun des récipients 2 sortant de l'unité de formage 3.

L'unité informatique permet également d'associer chacun des moules 31 à chaque récipient 2 sortant de l'unité de formage 3.

Plus précisément, lorsqu'un récipient 2 sort de l'unité de formage 3, l'unité informatique 5 permet à un utilisateur, comme expliqué ci-après, de savoir dans quel moule 31 et, donc, dans quel poste de soufflage le récipient 2 en question a été produit.

Pour cela, l'utilisateur utilise l'interface 6 de dialogue. Les échanges entre l'unité informatique 5 et l'interface 6 de dialogue sont illustrées schématiquement par la flèche 12 sur la figure 1.

Plus particulièrement, en cas de récipient 2 non acceptable, le procédé, via l'unité informatique 5, est paramétré pour générer une consigne d'alerte qui est transmise par l'unité informatique 5 à l'interface 6 de dialogue.

L'opérateur peut alors consulter l'interface 6 de dialogue et prendre connaissance de la consigne d'alerte.

Cette consigne d'alerte présente notamment des informations sur le récipient 2 considéré non acceptable, de même que sur la ou les zones critiques 7 qui ont permis de caractériser le récipient 2 comme étant non acceptable, et enfin sur le moule 31 duquel est issu ledit récipient 2.

En cas d'alerte, l'opérateur peut alors suivre la fabrication des récipients 2 par le moule 31 duquel le récipient 2 non acceptable est issu.

Plusieurs cas de figure sont ainsi possibles.

Dans un premier cas, le plus avantageux, un seul récipient 2 est considéré comme non acceptable, auquel cas les défauts du récipient 2 formé proviennent d'un autre facteur que les paramètres de production, par exemple d'un défaut dans la structure de la préforme ayant donné le récipient 2.

Dès lors, seul le récipient 2 en défaut est mis au rebut, le reste de la production étant considéré comme acceptable.

Dans un deuxième cas, l'opérateur peut déceler un défaut dans la fabrication des récipients 2 par l'un ou par plusieurs des moules 31, donc un ou plusieurs des postes de soufflage) de l'unité de fabrication 3.

L'invention peut donc permettre de mettre en évidence :
- une défaillance au niveau de l'un des postes de soufflage, par exemple la défaillance d'un moule 31 ou d'un autre composant, tel qu'une électrovanne, associé à un poste de soufflage ou l'usure prématurée de ce moule ou autre composant, lorsque plusieurs ou tous les récipients déclarés non conformes sortent d'un même moule 31, donc d'un même poste de soufflage ou
- une défaillance dans l'application des consignes de fabrication des récipients 2 ou
- un défaut de fabrication d'une préforme ou une défaillance transitoire, par exemple lorsqu'un seul récipient est déclaré non conforme

L'opérateur peut alors choisir de condamner le ou les postes de soufflage en défaut et donc d'obtenir une production en mode dégradé, dans laquelle un ou plusieurs moules 31 ne sont pas utilisés, ou de corriger, pour lesdits postes de soufflage incriminés, les paramètres de fabrication.

En revanche, dans le cas d'un trop grand nombre postes de soufflage défaillants, l'opérateur peut décider de stopper de manière préventive la production afin d'éviter une défaillance complète de la machine 1 ou alors une perte de production trop importante, avant de reconsidérer un paramétrage complet de la machine 1 ou une autre mesure corrective.

Enfin, si un seul poste de soufflage est défaillant, l'opérateur peut choisir de modifier les paramètres de production pour ce poste défaillant uniquement.

Les consignes choisies par l'opérateur sont donc transmises à l'unité de formage 3 depuis l'interface 6 de dialogue via l'unité informatique 5, tel qu'illustré par les flèches 12 et 13 sur la figure 1.

En variante, dans le cas d'une production totalement automatisée, l'unité informatique peut, sans intervention de l'opérateur, générer une consigne rectificative de production à destination d'un ou plusieurs postes de soufflage.

De préférence, une telle automatisation peut être subordonnée à une validation par l'opérateur dans le cadre d'une modification trop importante des consignes de production.

Dans un troisième cas, où aucun des récipients 2 n'est acceptable mais que les paramètres de fabrication sont respectés, l'utilisateur peut déterminer un problème de conception des récipients 2, notamment de leur forme.

Cela peut s'avérer utile lors de la conception d'un récipient d'une nouvelle forme.

Il est alors possible de réaliser une étape de rétro-engineering par exemple pour modifier structurellement les moules, ou au contraire modifier la forme des récipients, comme illustré schématiquement par la flèche 14 sur la figure 1.

Un tel procédé et une telle machine 1 de fabrication permettent donc d'obtenir une caractérisation précise quant à l'acceptation ou au refus d'un récipient 2 formé, cela à partir d'une image thermique. En effet, il est connu que, dans certains cas, des récipients soient considérés comme acceptables uniquement par rapport à leur épaisseur de matière, cependant ces récipients présentent un risque soit en termes de tenue mécanique en sortie de moule, soit en termes de résistance aux contraintes mécaniques lors de leur utilisation ou de leur mise dans le commerce.

D'une manière générale, les zones critiques 7 de l'image thermique peuvent être analysées soit toutes en même temps, soit indépendamment les unes à la suite des autres.

Enfin, comme évoqué dans les buts de l'invention, ce procédé permet d'atteindre une réduction des consommations d'énergie, puisqu'il permet d'optimiser, en les réduisant, les pressions nécessaires au soufflage, tout en maintenant une qualité optimale de production.

En effet, la tendance est à la réduction des temps de fabrication et des pressions pour le soufflage des récipients en PET.

Dès lors, ces conditions imposent une fabrication à la limite des tolérances de qualité acceptables pour les récipients en matière plastique.

Ce procédé permet donc de limiter les risques de défauts des récipients sans dégrader les cadences de production et en offrant la possibilité de modifier les caractéristiques des récipients et/ou de fabrication.

## Revendications

1. Procédé de contrôle d'un récipient (2) en matière plastique obtenu par moulage par soufflage, le procédé comprenant :
- une étape de captation d'une image thermique du récipient (2) en sortie de moule (31);
- une étape de caractérisation du récipient (2), dans laquelle une règle d'acceptation ou de refus de la qualité du récipient (2) est appliquée, en fonction de l'image thermique du récipient (2) en sortie de moule (31),
**caractérisé en ce que**, préalablement à l'étape de caractérisation, le procédé comprend une étape d'identification, sur l'image thermique, d'au moins une zone critique (7) correspondant à une partie structurelle du récipient (2),
et **en ce que** la règle d'acceptation est paramétrée pour considérer un récipient (2) comme acceptable si, pour chaque zone critique (7) identifiée, la température du récipient est inférieure à une température seuil prédéterminée.

2. Procédé selon la revendication 1, **caractérisé en ce que** la température seuil prédéterminée est comprise entre 45°C et 75°C.

3. Procédé selon la revendication 1 ou la revendication 2, **caractérisé en ce que** la température seuil prédéterminée est de 60°C.

4. Procédé selon l'une quelconque des revendications précédentes, **caractérisé en ce qu'**il comprend une étape de génération d'une alerte à destination d'un opérateur en cas d'identification d'un récipient (2) considéré comme non acceptable.

5. Procédé selon l'une quelconque des revendications précédentes, **caractérisé en ce que** l'étape de captation d'une image thermique du récipient (2) en sortie de moule (31) est réalisée dans un intervalle de temps inférieur ou égal à 5 secondes à compter de la fin de l'étape de dégazage du récipient (2), qui survient à l'issue de la fabrication du récipient (2).

6. Procédé selon la revendication précédente, **caractérisé en ce que** l'étape de captation d'une image thermique du récipient (2) en sortie de moule (31) est réalisée dans un intervalle de temps inférieur ou égal à 0,6 seconde à compter de la fin de l'étape de dégazage du récipient (2).

7. Machine (1) de fabrication de récipients (2) en matière plastique, **caractérisée en ce qu'**elle comprend :
- une unité de formage (3) des récipients (2) avec au moins poste de soufflage comprenant au moins un moule (31) ;
- des moyens d'acquisition (4) d'une image thermique positionnée en sortie de l'unité de formage (3) ;
- une unité informatique (5), connectée aux moyens d'acquisition (4) d'une image thermique, l'unité informatique (5) étant paramétrée pour mettre en oeuvre le procédé selon l'une des revendications 1 à 4.

8. Machine (1) selon la revendication 7, **caractérisée en ce que** les moyens d'acquisition (4) d'une image thermique comprennent une caméra thermique.

9. Machine (1) selon la revendication 7 ou la revendication 8, **caractérisée en ce que** l'unité de formage (3) comprend une pluralité de moules (31) pour la formation des récipients (2), l'unité informatique (5) étant paramétrée pour associer chaque récipient (2) à l'un des moules (31) et générer une alerte à destination d'un opérateur en cas de récipient (2) considéré comme non acceptable, ladite alerte incluant notamment des informations d'association permettant de déterminer dans lequel des moules (31) de l'unité de formage (3) un récipient (2) considéré comme non acceptable a été fabriqué.

10. Machine (1) selon la revendication 9, **caractérisée en ce qu'**elle comprend également une interface (6) de dialogue avec un opérateur, l'interface (6) de dialogue permettant l'affichage de l'alerte générée par l'unité informatique (5).

## Patentansprüche

1. Verfahren zur Kontrolle eines Behälters (2) aus Kunststoff, der durch Blasformen hergestellt ist, das Verfahren umfassend:
- einen Schritt des Erfassens eines Wärmebilds des Behälters (2) bei Verlassen der Form (31);
- einen Schritt des Charakterisierens des Behälters (2), bei dem eine Regel für die Annahme oder Ablehnung der Qualität des Behälters (2) in Abhängigkeit von dem Wärmebild des Behälters (2) bei Verlassen der Form (31) angewandt wird,
**dadurch gekennzeichnet, dass** vor dem Schritt des Charakterisierens das Verfahren einen Schritt des Ermittelns wenigstens eines kritischen Bereichs (7) auf dem Wärmebild umfasst, der einem Strukturabschnitt des Behälters (2) entspricht,
und dadurch, dass die Regel für die Annahme dafür parametriert ist, einen Behälter (2) als annehmbar anzusehen, wenn für jeden ermittelten kritischen Bereich (7) die Temperatur des Behälters niedriger als eine vorbestimmte Schwellentemperatur ist.

2. Verfahren nach Anspruch 1, **dadurch gekennzeichnet, dass** die vorbestimmte Schwellentemperatur zwischen 45 °C und 75 °C beträgt.

3. Verfahren nach Anspruch 1 oder 2, **dadurch gekennzeichnet, dass** die vorbestimmte Schwellentemperatur 60 °C beträgt.

4. Verfahren nach einem der vorhergehenden Ansprüche, **dadurch gekennzeichnet, dass** es einen Schritt des Erzeugens eines Alarms für einen Bediener bei Feststellung eines Behälters (2), der als nicht annehmbar angesehen wird, umfasst.

5. Verfahren nach einem der vorhergehenden Ansprüche, **dadurch gekennzeichnet, dass** der Schritt des Erfassens eines Wärmebilds des Behälters (2) bei Verlassen der Form (31) in einem Zeitabstand kleiner als oder gleich 5 Sekunden ab dem Ende des Schritts des Entgasens des Behälters (2) durchgeführt wird, der nach der Herstellung des Behälters (2) erfolgt.

6. Verfahren nach dem vorhergehenden Anspruch, **dadurch gekennzeichnet, dass** der Schritt des Erfassens eines Wärmebilds des Behälters (2) bei Verlassen der Form (31) in einem Zeitabstand kleiner als oder gleich 0,6 Sekunden ab dem Ende des Schritts des Entgasens des Behälters (2) durchgeführt wird.

7. Maschine (1) zur Herstellung von Behältern (2) aus Kunststoff, **dadurch gekennzeichnet, dass** sie Folgendes umfasst:
- eine Einheit zur Formung (3) der Behälter (2) mit wenigstens einer Blasstation, die wenigstens eine Form (31) umfasst;
- Mittel zur Erfassung (4) eines Wärmebilds, die am Ausgang der Formungseinheit (3) positioniert sind;
- eine Recheneinheit (5), die an die Mittel zur Erfassung (4) eines Wärmebilds angeschlossen ist, wobei die Recheneinheit (5) dafür parametriert ist, das Verfahren nach einem der Ansprüche 1 bis 4 durchzuführen.

8. Maschine (1) nach Anspruch 7, **dadurch gekennzeichnet, dass** die Mittel zur Erfassung (4) eines Wärmebilds eine Wärmekamera umfassen.

9. Maschine (1) nach Anspruch 7 oder 8, **dadurch gekennzeichnet, dass** die Formungseinheit (3) eine Mehrzahl von Formen (31) zur Bildung der Behälter (2) umfasst, wobei die Recheneinheit (5) dafür parametriert ist, jeden Behälter (2) einer der Formen (31) zuzuordnen und bei einem Behälter (2), der als nicht annehmbar angesehen wird, einen Alarm für einen Bediener zu erzeugen, wobei der Alarm insbesondere Zuordnungsinformationen umfasst, die es ermöglichen, zu bestimmen, in welcher der Formen (31) der Formungseinheit (3) ein Behälter (2), der als nicht annehmbar angesehen wird, hergestellt wurde.

10. Maschine (1) nach Anspruch 9, **dadurch gekennzeichnet, dass** sie ebenfalls eine Schnittstelle (6) zum Dialog mit einem Bediener umfasst, wobei die Schnittstelle (6) die Anzeige des Alarms ermöglicht, der von der Recheneinheit (5) erzeugt wurde.

## Claims

1. Method for inspecting a container (2) made of plastic material obtained by blow molding, the method comprising:
- a step of capturing a thermal image of the container (2) on leaving the mold (31);
- a step of characterization of the container (2), in which a rule for acceptance or rejection of the quality of the container (2) is applied, as a function of the thermal image of the container (2) on leaving the mold (31),
**characterized in that**, prior to the characterization step, the method comprises a step of identification, on the thermal image, of at least one critical zone (7) corresponding to a structural part of the container (2), and **in that** the acceptance rule is parameterized to consider a container (2) as acceptable if, for each identified critical zone (7), the temperature of the container is lower than a predetermined threshold temperature.

2. Method according to Claim 1, **characterized in that** the predetermined threshold temperature lies between 45°C and 75°C.

3. Method according to Claim 1 or Claim 2, **characterized in that** the predetermined threshold temperature is 60°C.

4. Method according to any one of the preceding claims, **characterized in that** it comprises a step of generation of an alert to an operator if a container (2) considered as unacceptable is identified.

5. Method according to any one of the preceding claims, **characterized in that** the step of capturing a thermal image of the container (2) on leaving the mold (31) is performed within a time interval less than or equal to 5 seconds from the end of the step of degassing of the container (2), which occurs on completion of the manufacturing of the container (2).

6. Method according to the preceding claim, **characterized in that** the step of capturing a thermal image of the container (2) on leaving the mold (31) is performed within a time interval less than or equal to 0.6 seconds from the end of the step of degassing of the container (2).

7. Machine (1) for manufacturing containers (2) made of plastic material, **characterized in that** it comprises:
- a forming unit (3) for forming the containers (2) with at least one blowing station comprising at least one mold (31);
- thermal image acquisition means (4) positioned at the output of the forming unit (3);
- a computing unit (5), connected to the thermal image acquisition means (4), the computing unit (5) being parameterized to implement the method according to one of Claims 1 to 4.

8. Machine (1) according to Claim 7, **characterized in that** the thermal image acquisition means (4) comprise a thermal camera.

9. Machine (1) according to Claim 7 or Claim 8, **characterized in that** the forming unit (3) comprises a plurality of molds (31) for forming the containers (2), the computing unit (5) being parameterized to associate each container (2) with one of the molds (31) and generate an alert to an operator in the event of a container (2) considered as unacceptable, said alert including in particular association information making it possible to determine in which of the molds (31) of the forming unit (3) a container (2) considered as unacceptable was manufactured.

10. Machine (1) according to Claim 9, **characterized in that** it also comprises a dialogue interface (6) with an operator, the dialogue interface (6) allowing the display of the alert generated by the computing unit (5).
